# EUROPEAN PATENT APPLICATION

(11) **EP 2 546 742 A1**
(43) Date of publication of application: **16.01.2013**
(21) Application number: 12749078.7
(22) Date of filing: 22.02.2012
(51) Int. Cl.: G06F 9/445, H04L 29/08

(54) **METHOD AND DEVICE FOR UPGRADING CPE**

(30) Priority: 23.02.2011 CN 201110044950
(71) Applicant: Huawei Device Co., Ltd., Shenzhen, Guangdong 518129 (CN)
(72) Inventor: WANG, Weihong, Shenzhen Guangdong 518129 (CN)
(74) Representative: Maiwald Patentanwalts GmbH
(86) International application number: PCT/CN2012/071431
(87) International publication number: WO 2012/113327

(57) **Abstract**

Embodiments of the present invention provide a method and device for upgrading CPE, and relate to the field of communications technologies, so as to make an upgrade process of CPE stable and reliable. The method for upgrading CPE includes: determining whether customer premise equipment CPE requires upgrade; when it is determined that the CPE requires upgrade, downloading an upgrade version file from a CPE version server and storing the upgrade version file; and upgrading the CPE by using the stored upgrade version file. The present invention may be applied to the field of broadband communications.

## Description

This application claims priority to Chinese Patent Application No. 201110044950.0, filed with the Chinese Patent Office on February 23, 2011, and entitled "METHOD AND DEVICE FOR UPGRADING CPE", which is incorporated herein by reference in its entirety.

### FIELD OF THE INVENTION

The present invention relates to the field of communications technologies, and in particular, to a method and device for upgrading CPE.

### BACKGROUND OF THE INVENTION

In a communication system, customer premise equipment CPE (Customer Premise Equipment) includes a home gateway, an access point AP (Access Point), a modem (Modem), a router, a data card, and so on. With the development of a home broadband service, the CPE is more widely applied in a home network. In the home broadband service, a personal computer PC (Personal Computer) of a user accesses an operator's network and communicates with a network side through the CPE.

Due to reasons such as a software quality problem or a change of an operator's service, the CPE requires product upgrade regularly or irregularly, so as to ensure normal use of the user and normal operation of the operator's network. In the prior art, the CPE is generally upgraded by using an operator's network management system in a remote upgrade manner.

In this remote upgrade manner, an upgrade process is invisible to the user; exceptional situations, for example, the CPE is powered off by a user or a network is interrupted, may occur in an upgrade process of the CPE, and the exceptional situations will lead to a CPE upgrade failure. As a result, stability and reliability of the upgrade process are relatively poor.

### SUMMARY OF THE INVENTION

A main objective of embodiments of the present invention is to provide a method and device for upgrading CPE, which can make an upgrade process of the CPE stable and reliable.

In order to achieve the foregoing object, the embodiments of the present invention adopt the following technical solutions.

A method for upgrading CPE includes:
determining whether CPE requires upgrade;
when it is determined that the CPE requires upgrade, downloading an upgrade version file of the CPE from a CPE version server and storing the upgrade version file; and
upgrading the CPE by using the stored upgrade version file.

A device for upgrading CPE includes:
a determining unit, configured to determine whether CPE requires upgrade;
a downloading unit, configured to download an upgrade version file of the CPE from a CPE version server when the determining unit determines that the CPE requires upgrade;
a storage unit, configured to store the upgrade version file downloaded by the downloading unit; and
an upgrading unit, configured to upgrade the CPE by using the upgrade version file stored by the storage unit.

After the foregoing technical solutions are adopted, with the method and device for upgrading CPE provided in the embodiments of the present invention, when CPE requires upgrade, an upgrade version file is downloaded and stored, and then upgrade is performed by using the stored upgrade version file. Because the upgrade version file has already been stored locally, a process for upgrading the CPE by using the stored upgrade version file is not affected by a network connection, thereby making the upgrade process of the CPE stable and reliable, and further reducing an operation and maintenance cost of the CPE.

### BRIEF DESCRIPTION OF THE DRAWINGS

To illustrate the technical solutions in the embodiments of the present invention more clearly, the accompanying drawings required for describing the embodiments are introduced briefly in the following. Apparently, the accompanying drawings in the following description merely show some embodiments of the present invention, and persons of ordinary skill in the art may also derive other drawings from these accompanying drawings without creative efforts.

FIG. 1 is a flow chart of a method for upgrading CPE according to an embodiment of the present invention;

FIG. 2A-2B are another flow chart of a method for upgrading CPE according to an embodiment of the present invention;

FIG. 3 is a structural block diagram of a device for upgrading CPE according to an embodiment of the present invention;

FIG. 4 is another structural block diagram of a device for upgrading CPE according to an embodiment of the present invention;

FIG. 5 is another structural block diagram of a device for upgrading CPE according to an embodiment of the present invention; and

FIG. 6 is another structural block diagram of a device for upgrading CPE according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are merely a part rather than all of the embodiments of the present invention. Based on the embodiments of the present invention, all other embodiments obtained by persons of ordinary skill in the art without creative efforts shall fall within the protection scope of the present invention.

It is obvious that the embodiments to be described are merely a part rather than all of the embodiments of the present invention. Based on the embodiments of the present invention, all other embodiments obtained by persons of ordinary skilled in the art without creative efforts shall fall within the protection scope of the present invention.

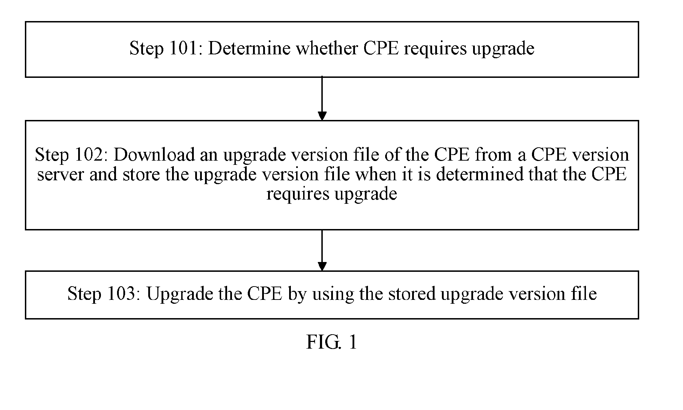

An embodiment of the present invention provides a method for upgrading CPE, and as shown in FIG. 1, the method includes the following steps:

Step 101: Determine whether CPE requires upgrade.

Due to reasons such as a software quality problem or a change of an operator's service, the CPE requires upgrade, so as to change, improve, or optimize a service function and service quality of the CPE.

Specifically, in this step, whether to upgrade the CPE may be determined by performing upgrade detection of the CPE. Because each version file of the CPE has a version identifier that one-to-one corresponds to its version, specifically, in this step, whether the CPE requires upgrade may be determined by detecting a version identifier of a version file of the CPE, that is, the upgrade detection of the CPE specifically includes:
acquiring a version identifier of an upgrade version file of the CPE from a CPE version server, where the CPE version server is configured to provide the upgrade version file of the CPE;
judging whether the acquired version identifier of the upgrade version file of the CPE is the same as a version identifier of a current version file of the CPE; and
when the acquired version identifier of the upgrade version file of the CPE is different from the version identifier of the current version file of the CPE, determining that the CPE requires upgrade; and otherwise, determining that the CPE does not require upgrade.

Optionally, the upgrade detection of the CPE may be performed periodically and automatically, that is, may be performed at intervals of given time, or may be performed through triggering of a user instruction.

Step 102: When it is determined that the CPE requires upgrade, download an upgrade version file of the CPE from a CPE version server and store the upgrade version file.

Step 103: Upgrade the CPE by using the stored upgrade version file.

With the method for upgrading CPE provided in this embodiment of the present invention, when CPE requires upgrade, an upgrade version file is downloaded and stored, and then upgrade is performed by using the stored upgrade version file. Because the upgrade version file has already been stored locally, a process for upgrading the CPE by using the stored upgrade version file is not affected by a network connection, thereby making the upgrade process of the CPE stable and reliable, and further reducing an operation and maintenance cost of the CPE.

In order to enable persons skilled in the art to understand the technical solutions in the embodiments of the present invention better, the method for upgrading CPE in the present invention is described in detail in the following by using a specific embodiment.

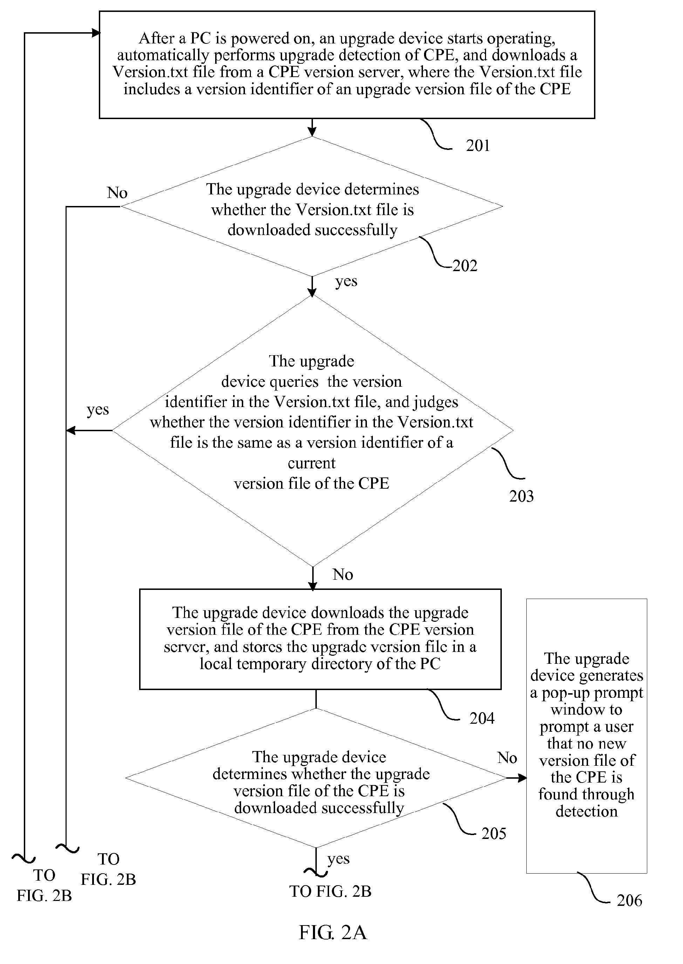

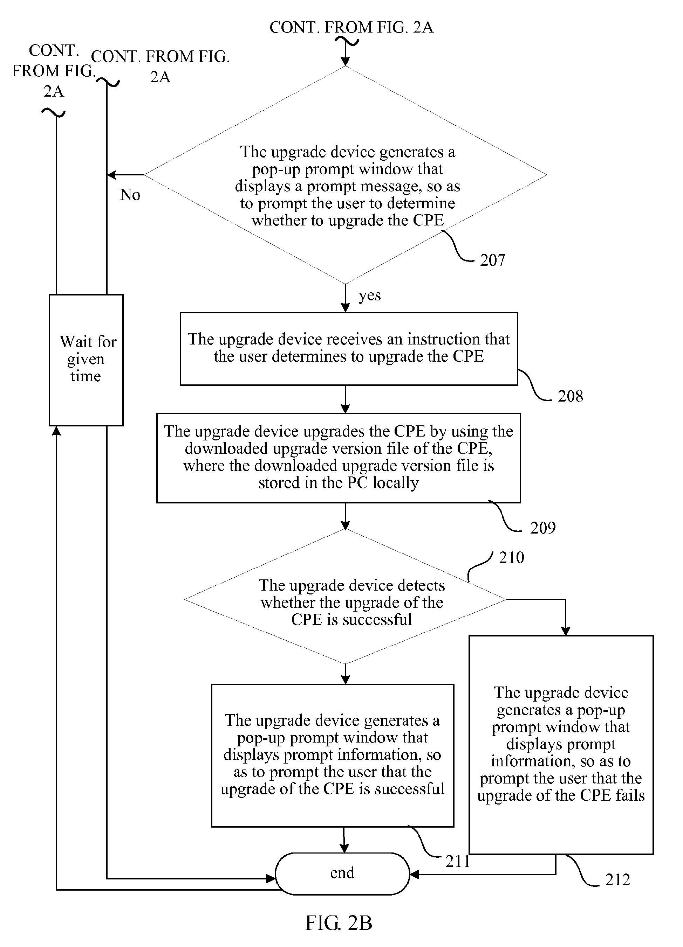

A method for upgrading CPE in this embodiment is based on a PC. The PC accesses an operator's network through CPE, and a device for upgrading CPE, which is referred to as an upgrade device in this embodiment, is disposed on the PC. The upgrade device is connected to a CPE version server through the CPE, where the CPE version server is configured to provide an upgrade version file of the CPE. As shown in FIG. 2A and FIG. 2B, this embodiment includes:

Step 201: After a PC is powered on, an upgrade device starts operating, automatically performs upgrade detection of CPE, and downloads a Version.txt file from a CPE version server, where the Version.txt file includes a version identifier of an upgrade version file of the CPE.

Step 202: The upgrade device determines whether the Version.txt file is downloaded successfully.

If the Version.txt file is not downloaded successfully, an upgrade process is ended; and if the Version.txt file is downloaded successfully, perform step 203.

Step 203: The upgrade device queries the version identifier in the Version.txt file, and judges whether the version identifier in the Version.txt file is the same as a version identifier of a current version file of the CPE, so as to determine whether the CPE requires upgrade.

When the version file in the Version.txt file is different from the version identifier of the current version file of the CPE, it is determined that the CPE requires upgrade; and otherwise, it is determined that the CPE does not require upgrade, and the upgrade process is ended.

Step 204: When the version identifier in the Version.txt file is different from the version identifier of the current version file of the CPE, the upgrade device downloads the upgrade version file of the CPE from the CPE version server, and stores the upgrade version file in a local temporary directory of the PC.

Step 205: The upgrade device determines whether the upgrade version file of the CPE is downloaded successfully.

If the upgrade version file of the CPE is not downloaded successfully, the upgrade device ends the upgrade process. In this case, optionally, this embodiment further includes step 206: The upgrade device generates a pop-up prompt window to prompt a user that no new version file of the CPE is found through detection.

If the upgrade version file of the CPE is downloaded successfully, perform step 207.

Step 207: When the upgrade version file of the CPE is downloaded successfully, the upgrade device generates a pop-up prompt window that displays a prompt message (a first prompt message), so as to prompt the user to determine whether to upgrade the CPE.

A purpose of this step is to enable the user to determine whether to upgrade the CPE, that is, make the upgrade process visible to the user, thereby preventing the CPE from an exceptional situation in the upgrade process, for example, the CPE is powered off by the user, and further improving stability and reliability of the upgrade process of the CPE. The user may deliver an instruction of determining to upgrade the CPE or an instruction of determining not to upgrade the CPE by directly clicking a button in the prompt window that pops up in step 207. When the user delivers the instruction of determining not to upgrade the CPE, the upgrade device ends the upgrade process.

Step 208: The upgrade device receives an instruction that the user determines to upgrade the CPE.

Step 209: The upgrade device upgrades the CPE by using the downloaded upgrade version file of the CPE, where the downloaded upgrade version file is stored in the PC locally.

Optionally, in this step, a prompt window that displays prompt information (second prompt information) may further pop up, so as to prompt the user that upgrade of the CPE is started, thereby further preventing an upgrade failure caused by a faulty operation of the user.

Because the upgrade version file of the CPE is stored in the PC locally, the upgrade process is not affected by a network connection, thereby making the upgrade process of the CPE stable and reliable, and further reducing an operation and maintenance cost of the CPE.

Optionally, next, this embodiment may further include:

Step 210: The upgrade device detects whether the upgrade of the CPE is successful.

Step 211: When the upgrade of the CPE is successful, the upgrade device generates a pop-up prompt window that displays prompt information (third prompt information), so as to prompt the user that the upgrade of the CPE is successful.

Then, the upgrade process of the CPE is ended.

Step 212: When the upgrade of the CPE fails, the upgrade device generates a pop-up prompt window that displays prompt information (fourth prompt information), so as to prompt the user that the upgrade of the CPE fails.

Then, the upgrade process of the CPE is ended.

The foregoing upgrade process may be performed periodically. After one upgrade process is ended, the upgrade device may return to step 201 after waiting for given time, to perform upgrade detection again. The given time may be determined according to specific conditions such as an upgrade frequency and cycle of the CPE.

With the method for upgrading CPE in this embodiment, an upgrade device performs an upgrading operation on CPE; and when the CPE requires upgrade, the upgrade device downloads and stores an upgrade version file, and then upgrades the CPE by using the stored upgrade version file. Because the upgrade version file has already been stored locally, a process that the upgrade device upgrades the CPE by using the stored upgrade version file is not affected by a network connection, thereby making an upgrade process of the CPE stable and reliable, and further reducing an operation and maintenance cost of the CPE. Moreover, in the entire upgrade process, a graphic interface for man-machine exchange may be adopted, so that the upgrade process is visible to the user, and a user operation is simple and convenient, thereby further ensuring stability and reliability of the upgrade process.

It should be noted that, in this embodiment, the upgrade device performs the upgrade detection of the CPE automatically in step 201, and this embodiment is not limited here. In another embodiment of the present invention, in step 201, the upgrade device may also perform the upgrade detection of the CPE through triggering of a user instruction, for example, the user clicks an upgrade button that the upgrade device displays on a PC operation interface, so as to trigger an upgrade detection process. If the upgrade device performs the upgrade detection through the triggering of the user instruction, optionally, in step 202, when the upgrade device determines that the Version.txt file is not downloaded successfully, a prompt window may pop up to prompt the user that no upgrade version file of the CPE is found through detection, and the upgrade process is ended. Other steps are the same as those in this embodiment, and are not described herein again.

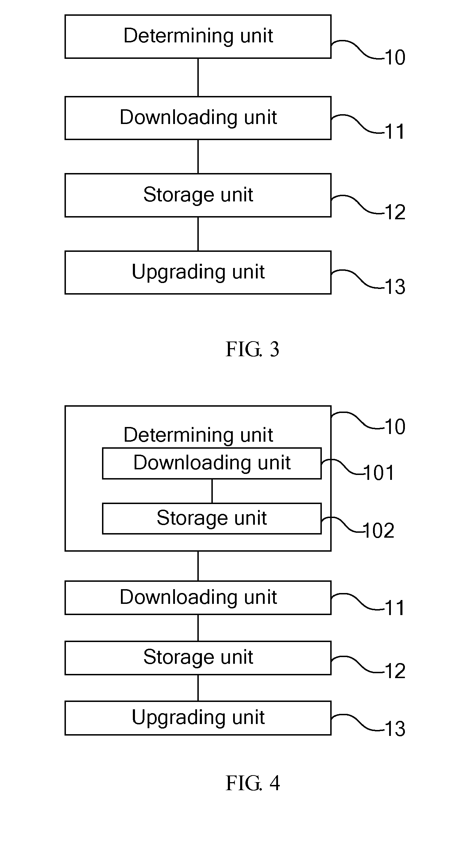

Corresponding to the foregoing method, an embodiment of the present invention further provides a device for upgrading CPE, and as shown in FIG. 3, the device includes:
a determining unit 10, configured to determine whether CPE requires upgrade;
a downloading unit 11, configured to download an upgrade version file of the CPE from a CPE version server when the determining unit 10 determines that the CPE requires upgrade;
a storage unit 12, configured to store the upgrade version file downloaded by the downloading unit 11; and
an upgrading unit 13, configured to upgrade the CPE by using the upgrade version file stored by the storage unit 12.

The device for upgrading CPE provided in this embodiment of the present invention downloads and stores an upgrade version file when CPE requires upgrade, and then performs upgrade by using the stored upgrade version file. Because the upgrade version file has already been stored locally, a process for upgrading the CPE by using the stored upgrade version file is not affected by a network connection, thereby making the upgrade process of the CPE stable and reliable, and further reducing an operation and maintenance cost of the CPE.

The device for upgrading CPE provided in this embodiment of the present invention may upgrade the CPE periodically and automatically, or at any time through a user instruction. That is to say, the determining unit 10 is specifically configured to perform upgrade detection of the CPE automatically at intervals of predetermined time, and determine, through the upgrade detection, whether the CPE requires upgrade, or perform upgrade detection of the CPE through triggering of a user instruction, and determine, through the upgrade detection, whether the CPE requires upgrade.

In an embodiment of the present invention, as shown in FIG. 4, the downloading unit 11 is further configured to acquire a version identifier of the upgrade version file of the CPE from the CPE version server.

At this time, the determining unit 10 further includes:
a judging module 101, configured to judge whether the version identifier of the upgrade version file of the CPE is the same as a version identifier of a current version file of the CPE, where the version identifier of the upgrade version file is acquired by the downloading unit 11; and
a determining module 102, configured to, when the judging module 101 judges that the version identifier of the upgrade version file of the CPE is different from the version identifier of the current version file of the CPE, where the version identifier of the upgrade version file is acquired by the downloading unit 11, determine that the CPE requires upgrade.

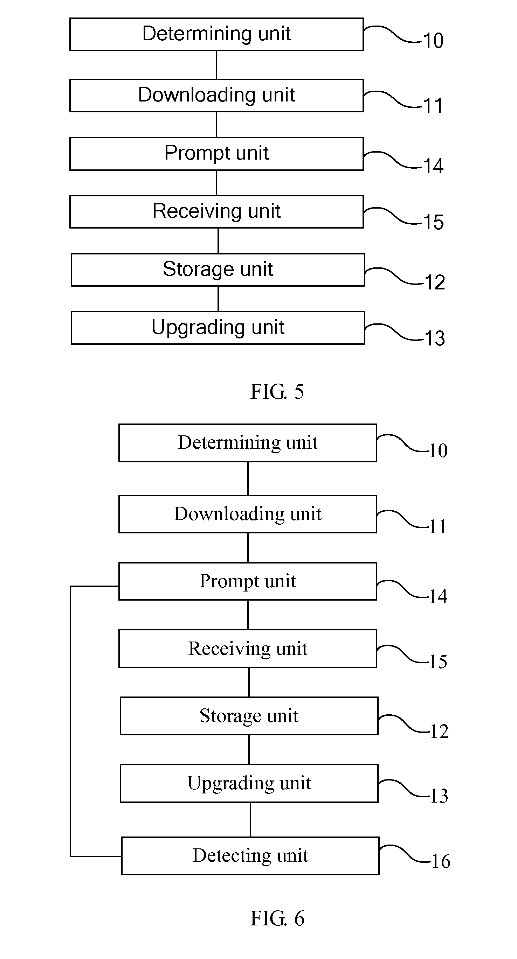

In another embodiment of the present invention, as shown in FIG. 5, the device for upgrading CPE may further include:
a prompt unit 14, configured to display a first prompt message after the downloading unit 10 successfully downloads the upgrade version file of the CPE from the CPE version server, so as to prompt a user to determine whether to upgrade the CPE; and
a receiving unit 15, configured to receive an instruction that the user determines to upgrade the CPE.

At this time, after the receiving unit 15 receives the instruction that the user determines to upgrade the CPE, the upgrading unit 13 upgrades the CPE by using the upgrade version file of the CPE, where the upgrade version file of the CPE is stored by the storage unit 12.

In this way, the upgrade process is visible to the user, thereby preventing the CPE from exceptional situation in the upgrade process, for example, the CPE is powered off by the user, and further improving stability and reliability of the upgrade process of the CPE.

Optionally, the prompt unit 14 is further configured to display a second prompt message when the upgrading unit 13 upgrades the CPE by using the stored upgrade version file, so as to prompt the user that upgrade of the CPE is started.

In another embodiment of the present invention, as shown in FIG. 6, the device further includes:
a detecting unit 16, configured to detect whether the upgrade of the CPE is successful after the upgrading unit 13 upgrades the CPE by using the stored upgrade version file.

At this time, the prompt unit 14 is further configured to display a third prompt message when the upgrade of the CPE is successful, so as to prompt the user that the upgrade is successful, and display a fourth prompt message when the upgrade of the CPE fails, so as to prompt the user that the upgrade fails.

The downloading unit 11 may be connected to the CPE version server through a hypertext transfer protocol HTTP (HyperText Transfer Protocol), a file transfer protocol FTP (File Transfer Protocol), or a trivial file transfer protocol TFTP (Trivial File Transfer Protocol), so as to download the upgrade version file of the CPE from the CPE version server, and to acquire a version identifier of a version file of the CPE.

Sequence numbers of the foregoing embodiments of the present invention are merely for description but are not intended to indicate preference of the embodiments.

Persons skilled in the art may understand clearly that the embodiments of the present invention may be implemented by using software plus an essential universal hardware platform. Base on such understanding, the essence of the technical solutions in the embodiments of the present invention or the part that makes contribution to the prior art can be substantially embodied in the form of a software product. The computer software product may be stored in a storage medium such as a ROM/RAM, a magnetic disk, or an optical disk, and includes several instructions used for instructing a computer apparatus (may be a personal computer, a server, or a network apparatus) to perform the methods described in the embodiments of the present invention or in some parts of the embodiments of the present invention.

The foregoing embodiments are not intended to limit the present invention. For persons of ordinary skill in the art, any modification, equivalent replacement, and improvement made without departing from the principle of the present invention shall all fall within the protection scope of the present invention.

## Claims

1. A method for upgrading CPE, comprising:
determining whether customer premise equipment CPE requires upgrade;
when it is determined that the CPE requires upgrade, downloading an upgrade version file of the CPE from a CPE version server and storing the upgrade version file; and
upgrading the CPE by using the stored upgrade version file.

2. The method according to claim 1, wherein the determining whether the user premise equipment CPE requires upgrade comprises:
performing upgrade detection of the CPE automatically at intervals of predetermined time, and determining, through the upgrade detection, whether the CPE requires upgrade; or
performing upgrade detection of the CPE through triggering of a user instruction, and determining, through the upgrade detection, whether the CPE requires upgrade.

3. The method according to claim 2, wherein the upgrade detection of the CPE comprises:
acquiring a version identifier of the upgrade version file of the CPE from the CPE version server;
judging whether the acquired version identifier of the upgrade version file of the CPE is the same as a version identifier of a current version file of the CPE; and
when the acquired version identifier of the upgrade version file of the CPE is different from the version identifier of the current version file of the CPE, determining that the CPE requires upgrade.

4. The method according to claim 1, wherein after the downloading the upgrade version file of the CPE from the CPE version server and storing the upgrade version file, and before the upgrading the CPE by using the stored upgrade version file, the method further comprises:
displaying a first prompt message, so as to prompt a user to determine whether to upgrade the CPE; and
receiving an instruction that the user determines to upgrade the CPE.

5. The method according to claim 4, wherein the upgrading the CPE by using the stored upgrade version file comprises:
upgrading the CPE by using the stored upgrade version file, and displaying a second prompt message, so as to prompt the user that upgrade of the CPE is started.

6. The method according to claim 4, wherein after the upgrading the CPE by using the stored upgrade version file, the method further comprises:
detecting whether the upgrade of the CPE is successful;
when the upgrade of the CPE is successful, displaying a third prompt message, so as to prompt the user that the upgrade of the CPE is successful; and
when the upgrade of the CPE fails, displaying a fourth prompt message, so as to prompt the user that the upgrade of the CPE fails.

7. A device for upgrading CPE, comprising:
a determining unit, configured to determine whether CPE requires upgrade;
a downloading unit, configured to download an upgrade version file of the CPE from a CPE version server when the determining unit determines that the CPE requires upgrade;
a storage unit, configured to store the upgrade version file downloaded by the downloading unit; and
an upgrading unit, configured to upgrade the CPE by using the upgrade version file stored by the storage unit.

8. The device according to claim 7, wherein the determining unit is specifically configured to perform upgrade detection of the CPE automatically at intervals of predetermined time, and determine, through the upgrade detection, whether the CPE requires upgrade, or perform upgrade detection of the CPE through triggering of a user instruction, and determine, through the upgrade detection, whether the CPE requires upgrade.

9. The device according to claim 8, wherein the downloading unit is further configured to acquire a version identifier of the upgrade version file of the CPE from the CPE version server; and
the determining unit further comprises:
a judging module, configured to judge whether the version identifier of the upgrade version file of the CPE is the same as a version identifier of a current version file of the CPE, wherein the version identifier of the upgrade version file is acquired by the downloading unit; and
a determining module, configured to, when the version identifier of the upgrade version file of the CPE is different from the version identifier of the current version file of the CPE, wherein the version identifier of the upgrade version file is acquired by the obtaining unit, determine that the CPE requires upgrade.

10. The device according to claim 7, wherein the device further comprises:
a prompt unit, configured to display a first prompt message, so as to prompt a user to determine whether to upgrade the CPE; and
a receiving unit, configured to receive an instruction that the user determines to upgrade the CPE.

11. The device according to claim 10, wherein the prompt unit is further configured to display a second prompt message when the he upgrading unit upgrades the CPE by using the stored upgrade version file, so as to prompt the user that upgrade of the CPE is started.

12. The device according to claim 10, wherein the device further comprises:
a detecting unit, configured to detect whether the upgrade of the CPE is successful after the upgrading unit upgrades the CPE by using the stored upgrade version file; and
the prompt unit is further configured to display a third prompt message when the upgrade of the CPE is successful, so as to prompt the user that the upgrade of the CPE is successful, and display a fourth prompt message when the upgrade of the CPE fails, so as to prompt the user that the upgrade of the CPE fails.

13. The device according to claim 7, wherein the downloading unit is configured to download the upgrade version file of the CPE from the CPE version server through a hypertext transfer protocol HTTP, a file transfer protocol FTP, or a trivial file transfer protocol TFTP.
